# DEMANDE DE BREVET EUROPEEN

(11) **EP 0 777 370 A1**
(43) Date de publication de la demande: **04.06.1997**
(21) Numéro de dépôt: 96203252.0
(22) Date de dépôt: 20.11.1996
(51) Int. Cl.: H04M 1/02, E05F 1/12

(54) **Téléphone portable muni d'un volet rotatif**

(30) Priorité: 29.11.1995 FR 9514129
(71) Demandeur: PHILIPS ELECTRONIQUE GRAND PUBLIC, 92150 Suresnes (FR); Philips Electronics N.V., 5621 BA Eindhoven (NL)
(72) Inventeur: Grandbert, Anthony, 75008 Paris (FR); Alix, Philippe, 75008 Paris (FR)
(74) Mandataire: Chaffraix, Jean

(57) **Abrégé**

Ce poste téléphonique comporte :
- un corps principal (10) sur lequel est prévu un clavier (4),
- un volet rotatif (12) destiné à masquer le clavier (4),
- un ensemble charnière (20) pour permettre la rotation dudit volet, comprenant :
   . une partie tubulaire (26) formée autour d'un axe, solidaire dudit volet,
   . un ressort (45) glissé dans la partie tubulaire,
   . deux doigts intérieurs (50 et 51) insérés dans ladite partie tubulaire (26),
   . deux éléments fixes (22 et 24) solidaires dudit corps principal pour déterminer ledit axe,
   . deux doigts supplémentaires (63) et (65) pour être fixés sur lesdits éléments fixes.

Application : postes sans fils.

## Description

L'invention concerne un poste téléphonique comportant :
- un corps principal et une partie recouvrable,
- un volet rotatif pouvant prendre différentes positions selon l'une desquelles la partie recouvrable est masquée,
- un ensemble charnière pour permettre la rotation, selon un axe, dudit volet, comprenant :
   . une partie tubulaire formée autour dudit axe, solidaire dudit volet,
   . un élément résilient glissé dans la partie tubulaire présentant deux faces de portée,
   . deux doigts intérieurs prévus pour être glissés dans ladite partie tubulaire, présentant chacun un élément de blocage pour être solidaire des mouvements de rotation dudit volet, une face d'appui pour être en contact avec l'une des faces de portée dudit élément résilient, et une face à came,
   . deux élément fixes solidaires dudit corps principal pour déterminer ledit axe.

L'invention concerne aussi un ensemble à volet rotatif convenant à des postes téléphoniques.

Un tel poste est décrit dans le document de brevet PCT WO 93/18592.

Un premier problème que pose ce poste connu provient du fait qu'il faut prévoir un pivot au niveau de l'élément fixe. Ce pivot présente un diamètre d'autant plus petit que l'ensemble charnière doit être de faible dimensions ce qui peut nuire à sa robustesse. Un autre problème provient de la protubérance toujours fixée à l'intérieur de cet élément fixe destiné à former le système de came qui détermine l'ouverture du volet. Cette protubérance ne semble pas facile à fabriquer par moulage.

L'invention propose un poste téléphonique du genre mentionné dans le préambule qui ne présente pas les inconvénients de l'art antérieur.

Pour cela, un tel poste est remarquable en ce que l'ensemble charnière comporte en outre :
. deux doigts supplémentaires pour être fixés sur lesdits éléments fixes présentant chacun deux faces : une face à came pour former un mouvement à came en coopération avec lesdites faces à cames desdits doigts intérieurs et une face de fixation pour être solidaire desdits éléments fixes.

La description suivante, accompagnée des dessins ci-annexés, le tout donné à titre d'exemples non limitatifs, fera bien comprendre comment l'invention peut être réalisée.

La figure 1 montre un poste téléphonique mobile conforme à l'invention.

La figure 2 montre, en perspective, le volet rotatif faisant partie du poste de la figure 1.

La figure 3 montre la partie fixe de l'ensemble charnière rattaché au bâti du poste de la figure 1.

La figure 4 montre les éléments faisant partie de l'ensemble charnière.

La figure 5 montre les doigts supplémentaires faisant partie de l'ensemble charnière.

La figure 6 montre les doigts intérieurs faisant partie de l'ensemble charnière.

La figure 7 montre les différents degrés d'ouverture du volet.

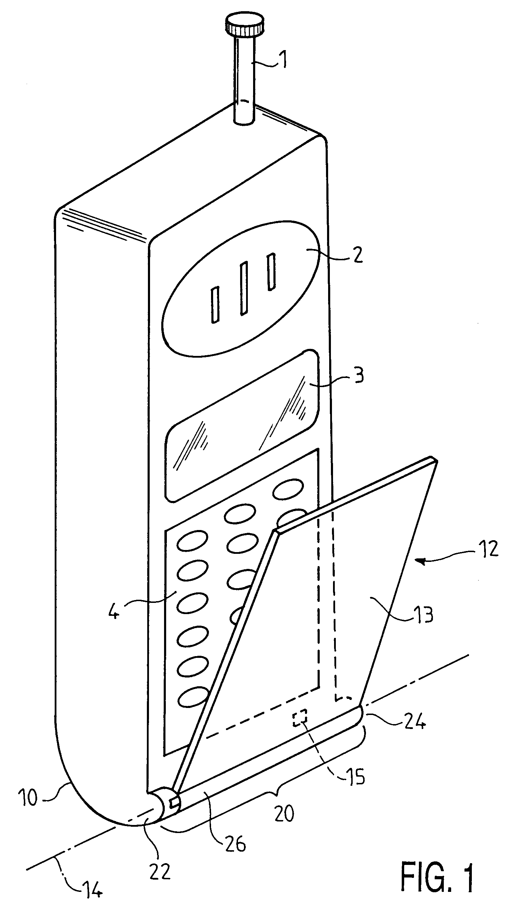

A la figure 1, on a représenté un poste téléphonique mobile conforme à l'invention. Les références 1, 2, 3 et 4 montrent respectivement les éléments habituels d'un tel poste à savoir : l'antenne, le haut-parleur/écouteur, l'écran et le clavier, le tout étant monté sur un corps de bâti 10. Pour protéger son clavier contre des manipulations inopportunes, lorsque le poste n'est pas utilisé, un volet 12 est prévu pour se rabattre sur le clavier 4. Sur la figure 1, le volet 12 est représenté dans une position mi-ouverte. Ce volet 12 comporte une partie de protection 13 qui vient masquer le clavier 4 lorsque le volet est en position fermée et qui, en outre, est utilisée comme paravent pour conduire les ondes sonores de la bouche du locuteur vers le microphone 15 lorsque le volet est en position d'ouverture normale. Ceci est obtenu par rotation autour d'un axe de pivotement 14. Le microphone 15, représenté en pointillé sur la figure, est situé près de l'axe 14. Le volet 12 est rattaché au bâti 10 par un ensemble charnière 20. Sur la figure 1, on a repéré deux éléments fixes 22 et 24 de cet ensemble 20 qui font office de palier et une partie tubulaire 26 qui fait partie du volet 14.

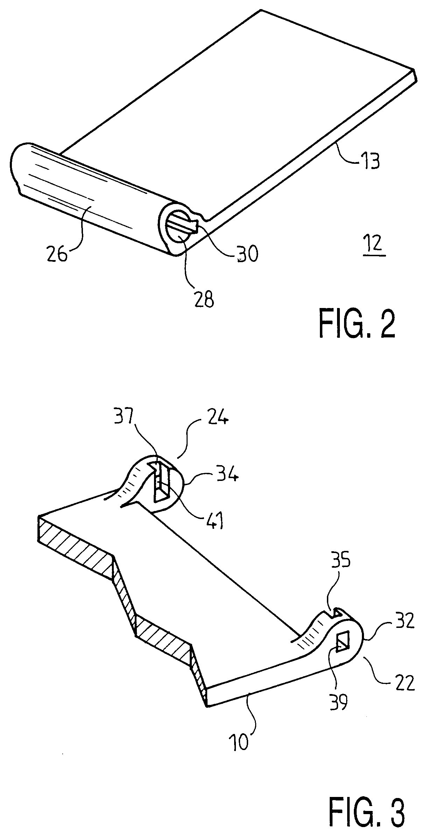

La figure 2 montre la constitution de ce volet 12. Les éléments communs avec ceux de la figure 1 portent les mêmes références. Cette figure 2 montre plus en détail la partie tubulaire 26. Cette partie 26 est traversée de part en part par une ouverture 28 dans laquelle est ménagée une coulisse 30.

La figure 3 montre plus en détail les éléments fixes 22 et 24. Ils sont formés respectivement par une partie pleine 32 et 34 solidaire du bâti 10. Ces parties pleines présentent respectivement des coulisses 35 et 37 et des ouvertures 39 et 41, de forme rectangulaire de préférence, qui débouchent sur l'extérieur.

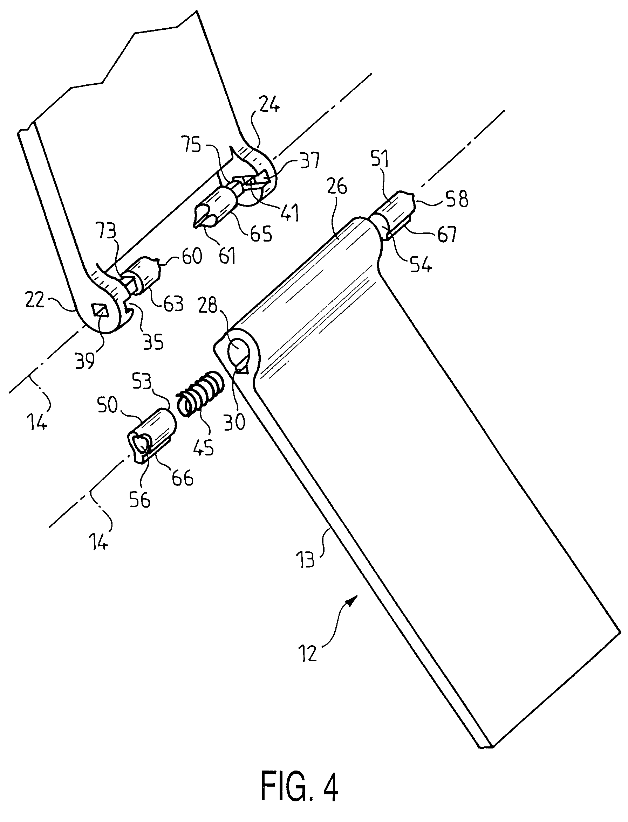

La figure 4 montre tous les éléments constitutifs de l'ensemble charnière 20 en vue éclatée. Les éléments communs avec ceux des figures précédentes portent les mêmes références. Un élément résilient 45, de préférence un ressort hélicoïdal, est prévu pour être inséré dans l'ouverture 28 de la partie tubulaire. De part et d'autre de cet élément résilient, deux doigts intérieurs 50 et 51 sont prévus pour être aussi insérés, au moins en partie, dans cette ouverture 28. Ces doigts présentent deux faces :
- une face 53, respectivement 54 qui s'appuie sur l'élément résilient 45 et
- une face dite face à came 56, respectivement 58 destinée à coopérer avec une face à came 60 et 61 de doigts extérieurs 63 et 65. Les doigts 50 et 51 sont pourvus chacun de guides 66 et 67 qui se glissent dans la coulisse 30 de façon à devenir solidaires du volet 12 lorsqu'ils sont insérés dans l'ouverture 28.
Les doigts supplémentaires présentent deux faces :
- ladite face à came 60 et 61 coopérant avec la face à came 56 et 58 des doigts intérieurs 50 et 51 de façon à former un système à came,
- une face d'appui 73 et 75 destinée à les solidariser des éléments fixes 22 et 24.
Ces faces d'appui se glissent lors du montage dans les coulisses 35 et 37 et sous la pression de l'élément résilient 45 viennent s'encastrer dans les ouvertures 39 et 41.

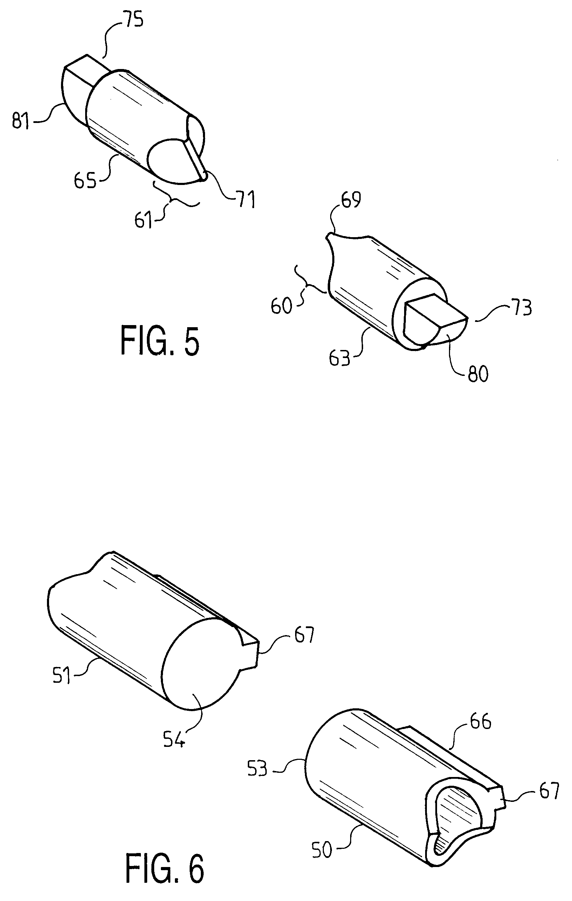

La figure 5 montre plus en détail la constitution des doigts supplémentaires 63 et 65. Sur cette figure, il est à remarquer que les faces à came 60 et 61 se présentent sous la forme d'une unique saillie 69 et 71 et que les faces d'appui 73 et 75 comportent respectivement une partie arrondie 80 et 81 de section rectangulaire pour faciliter leur insertion dans l'ensemble à charnière 20, en venant s'y encastrer après insertion dans les ouvertures 39 et 41.

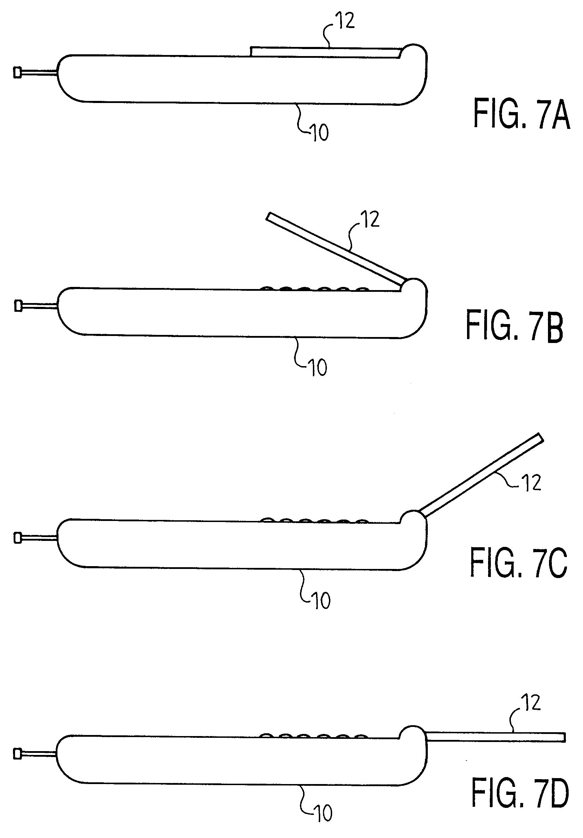

La figure 6 montre plus en détail la constitution des doigts intérieurs 50 et 51. Sur cette figure, il est à noter le profil de la face à came qui est conçu selon les pratiques de l'art pour obtenir les configurations d'ouverture explicitées à la figure 7.

En A sur cette figure 7, on montre la position fermée du volet sur le poste téléphonique.

En B on montre une position limite, pour un angle se situant entre 20° et 50°, qui permet une ouverture spontanée jusqu'à l'angle souhaité, autour de 160°, montré en C.

En outre, il est souhaité une position dite à 180° montrée en D sur la figure qui peut être utile pour poser le poste sur une surface plane avec sa face contre cette surface.

## Revendications

1. Poste téléphonique comportant :
- un corps principal et une partie recouvrable,
- un volet rotatif pouvant prendre différentes positions selon l'une desquelles la partie recouvrable est masquée,
- un ensemble charnière pour permettre la rotation, selon un axe, dudit volet comprenant :
. une partie tubulaire formée autour dudit axe, solidaire dudit volet,
. un élément résilient glissé dans la partie tubulaire présentant deux faces de portée,
. deux doigts intérieurs prévus pour être glissés dans ladite partie tubulaire, présentant chacun un élément de blocage pour être solidaire des mouvements de rotation dudit volet, une face d'appui pour être en contact avec l'une des faces de portée dudit élément résilient, et une face à came,
. deux élément fixes solidaires dudit corps principal pour déterminer ledit axe,
caractérisé en ce que l'ensemble charnière comporte en outre :
. deux doigts supplémentaires pour être fixés sur lesdits éléments fixes présentant chacun deux faces : une face à came pour former un mouvement à came en coopération avec lesdites faces à cames desdits doigts intérieurs et une face de fixation pour être solidaire desdits éléments fixes.

2. Ensemble à volet rotatif convenant à des postes téléphoniques selon la revendication 1 caractérisé en ce qu'il comporte :
- un bâti,
- un volet rotatif pouvant prendre différentes positions
- un ensemble charnière pour permettre la rotation, selon un axe, dudit volet comprenant :
. une partie tubulaire formée autour dudit axe,
. un élément résilient glissé dans la partie tubulaire présentant deux faces de portée,
. deux doigts intérieurs prévus pour être glissés dans ladite partie tubulaire, présentant chacun un élément de blocage pour être solidaire des mouvements de rotation dudit volet, une face d'appui pour être en contact avec l'une des faces de portée dudit élément résilient, et une face à came,
. deux éléments fixes solidaires dudit bâti pour déterminer ledit axe,
. deux doigts supplémentaires pour être fixés sur lesdits éléments fixes présentant chacun deux faces : une face à came pour former un mouvement à came en coopération avec lesdites faces à cames desdits doigts intérieurs et une face de fixation pour être solidaire desdits éléments fixes.

3. Ensemble à volet rotatif selon la revendication 2 caractérisé en ce que la face de fixation des doigts supplémentaires comportent un face arrondie pour faciliter leur insertion dans une coulisse ménagée dans les éléments fixes.

4. Ensemble à volet rotatif selon la revendication 2 ou 3 caractérisé en ce que les faces à cames sont prévues pour obtenir différents degrés d'ouverture du volet :
- une position repliée,
- une position limite pour une ouverture spontanée jusqu'à la position souhaitée,
- une position normale,
- une position dite à 180°.
